(19) Europäisches Patentamt
European Patent Office
Office européen des brevets

(11) **EP 4 177 575 B1**

(12) # EUROPÄISCHE PATENTSCHRIFT

(45) Veröffentlichungstag und Bekanntmachung des Hinweises auf die Patenterteilung:
**25.09.2024  Patentblatt 2024/39**

(51) Internationale Patentklassifikation (IPC):
**G01F 1/66** *(2022.01)*       **G01F 15/02** *(2006.01)*
**G01L 9/00** *(2006.01)*        *G01L 1/00* *(2006.01)*

(21) Anmeldenummer: **22205170.8**

(22) Anmeldetag: **02.11.2022**

(52) Gemeinsame Patentklassifikation (CPC):
**G01F 1/662; G01F 15/024; G01L 9/0022**

(54) **DRUCKERMITTLUNG IN EINEM ULTRASCHALL-FLUIDZÄHLER MITTELS PIEZOKERAMISCHEM ULTRASCHALL-WANDLER**

PRESSURE DETECTION IN AN ULTRASONIC FLOW METER USING A PIEZOCERAMIC ULTRASONIC TRANSDUCER

DÉTECTION DE PRESSION DANS UN COMPTEUR DE FLUIDE À ULTRASONS AU MOYEN D'UN TRANSDUCTEUR ULTRASONORE PIÉZOCÉRAMIQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **09.11.2021   DE 102021129099**

(43) Veröffentlichungstag der Anmeldung:
**10.05.2023   Patentblatt 2023/19**

(73) Patentinhaber: **Diehl Metering GmbH**
**91522 Ansbach (DE)**

(72) Erfinder:
• **Herrmann, Florian**
**91550 Dinkelsbühl (DE)**
• **Wolf, Philip**
**91522 Ansbach (DE)**

(74) Vertreter: **Diehl Patentabteilung**
**c/o Diehl Stiftung & Co. KG**
**Stephanstraße 49**
**90478 Nürnberg (DE)**

(56) Entgegenhaltungen:
EP-A1- 3 798 600          WO-A1-2018/219492
DE-A1- 102012 022 376     DE-B3- 102020 122 128

**Beschreibung**

Die vorliegende Erfindung betrifft zum einen ein Verfahren zum Betrieb eines Ultraschall-Fluidzählers gemäß dem Oberbegriff des Anspruchs 1 sowie zum anderen einen Ultraschall-Fluidzähler gemäß dem Oberbegriff des Anspruchs 16.

Technologischer Hintergrund

Ultraschall-Fluidzähler dienen dazu, den Durchfluss an Fluid in einem Fluidleitungsnetz, beispielsweise einem Wasserleitungsnetz, zu bestimmen. In einem Fluidleitungsnetz steht das Fluid unter Druck. Eine Durchflussmessung bzw. Fluidvolumenstrommessung erfolgt auf Basis einer Messung der Laufzeit eines das Fluid durchschallenden Ultraschallsignals. Die Messung der Laufzeit erfolgt hierbei einmal mit und einmal gegen die Strömungsrichtung. Aus der Laufzeitdifferenz kann der Fluiddurchfluss bzw. Fluidvolumenstrom ermittelt werden. Ultraschall-Fluidzähler werden üblicherweise von einer Batterie mit elektrischer Energie versorgt. Die Batteriekapazität einer solchen Batterie deckt die komplette Lebensdauer des Ultraschall-Fluidzählers im Feld ab. Die Lebensdauer eines Ultraschall-Fluidzählers liegt üblicherweise in einem Bereich von 12 bis 16 Jahren.

Neben der Durchflussmessung ist auch eine Messung des in dem Fluidleitungsnetz vorliegenden Drucks bzw. der Druckänderungen von besonderem Interesse. Zur Druckmessung in Fluidleitungsnetzen werden üblicherweise eigenständige Druckmessgeräte in das Fluidleitungsnetz eingebaut. Alternativ können Fluidzähler mit einem zusätzlichen, eigenständigen Druckmessgerät bzw. Drucksensor ausgestattet sein. Demnach werden sowohl für die Druckmessung als auch für die Durchflussmessung eigenständige Sensoren benötigt. Hierdurch werden die Produktionskosten des Ultraschall-Fluidzählers erheblich erhöht.

Druckschriftlicher Stand der Technik

Die EP 3 367 074 A1 beschreibt ein elektronisches Fluid-Durchflussmessgerät, welches zwei Ultraschallwandler umfasst. Die Ultraschallwandler sind derart positioniert, dass sie Ultraschallsignale durch eine erste Wandung übertragen. Das Durchflussmessgerät umfasst zudem einen eigenständigen eingebauten Drucksensor, welcher in einer Sensorbohrung angeordnet ist. Der Drucksensor umfasst ein Sensorgehäuse in Form einer flexiblen Membran, welche die Sensorbohrung gegenüber dem Fluid abdichtet. Ein Sensorelement erkennt auf dem Fluiddruck basierende Membranveränderungen und ermittelt daraus einen Druck oder eine Druckänderung des Fluids. Das Sensorelement kann hierbei auf induktiven, kapazitiven, piezoelektrischen oder Dehnungsmessstreifen basierenden Technologien beruhen.

Die EP 3 158 297 B1 beschreibt einen Ultraschall-Verbrauchszähler zur Messung der Strömungsrate eines Fluids, welcher zwei Ultraschallwandler an der Außenfläche eines Strömungsrohres umfasst. Die Ultraschallwandler sind so angeordnet, dass sie Ultraschallsignale durch eine Wand des Strömungsrohres übertragen. Zudem umfasst der Ultraschall-Verbrauchszähler zwei Dehnungsmesser an der Außenfläche des Strömungsrohres, die ein Signal erzeugen, das den Druck des Fluids anzeigt. Die Dehnungsmesser sind ebenfalls an der Außenfläche des Strömungsrohres angeordnet und messen die Dehnung des Strömungsrohres in Reaktion auf den Druck des Fluids.

Die DE 10 2012 022376 A1 beschreibt ein Verfahren zur Messung des Drucks und der Durchflussgeschwindigkeit eines Fluids in einem Behälter. Zur Bestimmung des Fluiddrucks umfasst wenigstens eine Ultraschall-Sende-/Empfangseinheit eine elastische Membran, die ein Lumen gegenüber dem Fluid abgrenzt. Durch eine Bestimmung der Resonanzfrequenz eines Ultraschallsignals entlang einer Ultraschallstrecke kann der Fluiddruck ermittelt werden.

Die WO 2018/219492 A1 offenbart einen Ultraschalldurchflussmesser, der zur Druckbestimmung entlang einer Messstrecke jeweils zwei Ultraschallsignale in Strömungsrichtung und entgegen der Strömungsrichtung mit unterschiedlichen Frequenzen aussendet. Basierend auf den Ultraschallsignalen wird ein Phasen-Frequenz-Offset zwischen den zwei Frequenzen in Strömungsrichtung und entgegen der Strömungsrichtung bestimmt. Hieraus wird ein Mittelwert des Phasen-Frequenz-Offset bestimmt und daraus der Druck ermittelt.

Die EP 3 798 600 A1 beschreibt eine Messeinrichtung zur Ermittlung eines Fluiddrucks in einem durchströmten Messvolumen. Hierbei wird ein Offset zwischen einem Anregungsmuster und einem Ausgangssignal bestimmt, über welchen auf den Fluiddruck im Messvolumen zurückgeschlossen werden kann.

Die DE 10 2020 122128 B3 beschreibt eine Druckmessung in einer Druckmesszelle basierend auf einem kapazitiven Druckmessgerät.

Aufgabe der vorliegenden Erfindung

Aufgabe der vorliegenden Erfindung ist es, ein Verfahren zum Betrieb eines Ultraschall-Fluidzählers bzw. einen Ultraschall-Fluidzähler zur Verfügung zu stellen, welches bzw. welcher eine kostengünstige und einfach zu integrierende Messung des Fluiddrucks ermöglicht.

Lösung der Aufgabe

Die vorstehende Aufgabe wird durch ein Verfahren mit den Merkmalen des Anspruchs 1 sowie durch einen Ultraschall-Fluidzähler gemäß Anspruch 16 gelöst. Zweckmäßige Ausgestaltungen des erfindungsgemäßen Verfahrens und des Ultraschall-Fluidzählers werden in den zugehörigen abhängigen Ansprüchen beansprucht.

Eine über das Fluid auf den Ultraschallwandler also auf die Piezokeramik wirkende durch eine Fluiddruckänderung verursachte hydraulische Kraftänderung erzeugt einen Spannungssignalverlauf an dem Ultraschallwandler. Erfindungsgemäß wird der Spannungssignalverlauf von der Auswerteelektronik abgegriffen und basierend auf der Spannung des Spannungssignalverlaufs eine Fluiddruckänderung abgeleitet. Der Pegelverlauf bzw. die Spannung des Spannungssignalverlaufs hängt von der Stärke und der Einwirkdauer der hydraulischen Kraftänderung ab, welche auf den Ultraschallwandler wirkt, d. h. von dem Impuls, der auf den Ultraschallwandler wirkt. Je größer die hydraulische Kraftänderung ist, desto größer ist der Pegelverlauf bzw. die Spannung und umgekehrt. Der Pegelverlauf bzw. die Spannung, d. h. die Amplitude, des Spannungssignalverlaufs und die hydraulische Kraftänderung sind somit proportional zueinander. Hierdurch wird es möglich, Fluiddruckänderungen aus dem Spannungssignalverlauf abzuleiten, ohne dass eine zusätzliche Sensorik verwendet werden muss. Vielmehr genügt es, die Auswerteelektronik bzw. die diesbezügliche Betriebssoftware entsprechen anzupassen. Hierdurch wird eine kostengünstige Möglichkeit geschaffen, weitere Informationen zu dem Fluid oder dem Fluidleitungsnetz zu erlangen. Ebenfalls kann das Verfahren einfach umgesetzt werden, da keine zusätzlichen Bohrungen und/oder Sensoren benötigt werden.

Zweckmäßigerweise können für den Abgriff des Spannungssignalverlaufs Spannungssignale kontinuierlich oder diskontinuierlich vom Ultraschallwandler abgegriffen werden. Insbesondere ein kontinuierlicher Abgriff kann vorteilhaft sein, da andernfalls die vom Ultraschallwandler erzeugte Spannung durch dessen Innenwiderstand von selbst abgebaut werden könnte. Infolgedessen könnte nicht jede Druckschwankung erfasst werden und somit eine fehlerhafte Druckänderung gemessen werden.

Zweckmäßigerweise erfolgt eine Integration oder Akkumulation der abgegriffenen Spannungssignale oder eine Integration oder eine Akkumulation von aus den abgegriffenen Spannungswerten abgeleiteter Fluiddruckwerte oder Fluiddruckänderungswerte oder eine Integration oder Akkumulation von aus dem Spannungssignalverlauf abgeleiteter Fluiddruckwerte oder Fluiddruckänderungswerte. Hierdurch können die Spannungssignale oder die Fluiddruckwerte oder die Fluiddruckänderungswerte in einfacher Weise z. B. nach einer gewissen Beobachtungszeit ausgewertet werden.

Indem ein initialer, den Druck im Fluidleitungsnetz repräsentierender Wert vorgegeben ist, kann mittels der abgegriffenen Spannungssignale und/oder mittels der abgeleiteten Druckwerte oder Druckänderungswerte ein Druck und/oder eine Druckänderung im Fluidleitungsnetz bestimmt werden.

Vorzugsweise kann bzw. können der Spannungssignalverlauf oder die Spannungssignale von der Auswerteelektronik hochohmig abgegriffen werden. Dies bedeutet, dass der durch den Abgriff aufgebrachte Widerstand, z. B. der Eingangswiderstand eines Operationsverstärkers, vorzugsweise um mindestens den Faktor 1.000 größer ist, als der ohmsche Ersatzwiderstand des Ultraschallwandlers. Zweckmäßigerweise ist der aufgebrachte Widerstand größer als 750 MΩ, bevorzugt größer als 900 MΩ, besonders bevorzugt größer als 1 GΩ.

Vorteilhafterweise können die bzw. kann der von der Auswerteelektronik abgegriffene(n) Spannungssignale oder Spannungssignalverlauf verstärkt oder gedämpft werden.

Indem die bzw. der von der Auswerteelektronik abgegriffene(n) Spannungssignale oder Spannungssignalverlauf gefiltert werden können bzw. kann, können alle Störsignale, die nicht aus der hydraulischen Kraftänderung resultieren, aus dem Spannungssignal oder Spannungssignalverlauf herausgefiltert werden. Hierdurch wird ein besonders präzises Verfahren ermöglicht.

Zweckmäßigerweise kann ein zuvor, vorzugsweise auf einen vorher festgelegten Spannungspegel, aufgeladener Messkondensator entladen werden. Hierfür werden die abgegriffenen Spannungssignale oder der abgegriffene Spannungssignalverlauf dem Messkondensator zugeleitet und dieser in Abhängigkeit der Spannungssignale oder des Spannungssignalverlaufs entladen. Je nach Pegel der Spannungssignale oder Pegelverlauf des Spannungssignalverlaufs wird der Messkondensator unterschiedlich stark entladen. Vorzugsweise ist der Messkondensator in einer Auswerteschaltung angeordnet, welche ein Halbleiterbauelement, z. B. ein n-Kanal MOSFET, umfasst, das in Abhängigkeit des an seinem Ansteueranschluss bzw. Gate-Anschluss anliegenden Pegels der Spannungssignale oder des Pegelverlaufs des Spannungssignalverlaufs den Messkondensator entlädt. Aus dem Entladungsverhalten des Messkondensators kann somit auf die vom Fluid auf den Ultraschallwandler ausgeübte hydraulische Kraftänderung geschlossen werden.

Indem der Ladezustand des Messkondensators jeweils nach einer festgelegten Entladezeit bzw. einem festgelegten Zeitintervall ermittelt wird, sind die nach einem festgelegten Entladezeitpunkt bzw. Zeitintervall ermittelten Ladezustände des Messkondensators jeweils untereinander vergleichbar. Nach der Ermittlung des Ladezustands wird der Messkondensator wieder auf den vorher festgelegten Spannungspegel aufgeladen und erneut, z. B. mit den Spannungssignalen oder dem Spannungssignalverlauf, entladen. Vorzugsweise beträgt die festgelegte Entladezeit bzw. das festgelegte Zeitintervall 20 bis 40 s, bevorzugt 25 bis 35 s, besonders bevorzugt 28 bis 32 s. Durch die langen Entladezeiten und das bzw. die durch die Entladezeiten bedingte Intervall bzw. Frequenz zur Ermittlung des Ladezustands kann ein besonders energiesparender Betrieb gewährleistet werden.

Zweckmäßigerweise wird der Ladezustand des Messkondensators digital ausgewertet, indem z. B. die Ladespannung des Messkondensators mittels eines Analog-Digital-Wandlers gemessen bzw. ausgelesen wird. Hierdurch kann ein bereits im Ultraschall-Fluidzähler vorhandenes Bauteil verwendet werden.

Alternativ kann der Ladezustand des Messkondensators analog, z. B. mittels einer Analog-Schaltung, ausgewertet werden. Hierbei wird die Ladespannung des Messkondensators nach Ablauf der Entladezeit über einen bekannten Widerstand abgebaut und die Zeitdauer gemessen, bis die Ladespannung auf einen definierten Referenzwert abgebaut ist. Da die Zeitdauer dem Ladezustand des Messkondensators entspricht, kann diese in den Ladezustand des Messkondensators umgerechnet werden.

Vorteilhafterweise kann aus dem ermitteltem Ladezustand des Messkondensators oder der ermittelten Zeitdauer, bis die Ladespannung des Messkondensators auf einen definierten Referenzwert abgebaut ist, mittels eines Kennfeldes in eine korrespondierende, z. B. relative, Fluiddruckänderung ermittelt werden. Alternativ kann der ermittelte Ladezustand des Messkondensators auch mit einem Referenzladezustand verglichen werden, um eine Fluiddruckänderung zu bestimmen.

Beispielsweise kann das Kennfeld eine Lookup-Tabelle oder ein Polynom sein.

Zweckmäßigerweise werden bzw. wird basierend auf dem Spannungssignalverlauf folgendes vorgenommen:

    Ermittlung eines Fluiddrucks und/oder
    Erkennung einer Leckage und/oder
    Überwachung des Fluidleitungsnetzes und/oder
    Regelung der Ansteuerung der Pumpenleistung des Versorgers für das Fluidleitungsnetzes.

Infolgedessen können aus dem Spannungssignalverlauf verschiedene Kennwerte bzw. Informationen zu dem Fluid oder dem Fluidleitungsnetz ermittelt werden und/oder verschiedene Funktionen realisiert werden. Das Verfahren eignet sich somit für viele verschiedene Anwendungen. Der vorliegende Fluiddruck kann z. B. über eine Integration oder Akkumulation der gemessenen Fluiddruckänderung in Verbindung mit einem initialen, den Druck im Fluidleitungsnetz repräsentierenden Wert, z. B. bei Einbau des Fluidzählers, ermittelt werden. Mittels der Überwachung des Fluidleitungsnetzes können insbesondere Druckschläge innerhalb desselben erkannt werden. Diese verursachen z. B. eine höhere mechanische Belastung des Fluidleitungsnetzes, wodurch die im Fluidleitungsnetz verbauten Komponenten schneller verschleißen können. Die Fluidleitungsnetzüberwachung kann dem Nutzer infolgedessen präventiv darauf hinweisen, dass einzelne Komponenten des Fluidleitungsnetzes ausgetauscht werden müssen. Mit Hilfe der Regelung der Ansteuerung der Pumpenleistung des Versorgers für das Fluidleitungsnetz können kann insbesondere ein energieeffizienter Pumpenbetrieb ermöglicht werden.

Zweckmäßigerweise wird die Feststellung einer Fluiddruckänderung und/oder die Ermittlung eines Fluiddrucks und/oder die Erkennung einer Leckage und/oder die Überwachung des Fluidleitungsnetzes und/oder die Regelung der Ansteuerung der Pumpenleistung des Versorgers für das Fluidleitungsnetzes von einem Head-End vorgenommen. Bei einem Head-End handelt es sich insbesondere um einen Logikknoten oder eine zentrale Datenverwaltung. Das Head-End kann vorzugsweise am Ultraschall-Fluidzähler oder an einem externen Konzentrator angebracht sein kann. Die Funktionen oder Kennwerte können vorteilhafterweise mittels eines Displays und/oder einer Datenschnittstelle an dem Ultraschall-Fluidzähler und/oder an dem Head-End ausgegeben werden, sodass der Nutzer und/oder Endkunde über diese informiert wird.

Die vorliegende Erfindung betrifft darüber hinaus einen Ultraschall-Fluidzähler, vorzugsweise Ultraschall-Wasserzähler, gemäß dem Oberbegriff des Anspruchs 16. Erfindungsgemäß wird der Ultraschall-Fluidzähler nach einem Verfahren gemäß einem der Ansprüche 1 bis 15 betrieben.

Vorzugsweise ist bei dem Ultraschall-Fluidzähler eine Datenschnittstelle zum Datenexport vorgesehen.

Vorzugsweise kann der Ultraschallwandler unmittelbar dem Fluid ausgesetzt sein. Alternativ kann zwischen dem Ultraschallwandler und dem Fluid ein Metallplättchen oder eine Metallmembran oder ein Kunststoffplättchen oder eine Kunststoffmembran vorgesehen sein, welche die hydraulische Kraft oder Kraftänderung auf den Ultraschallwandler überträgt. Die Metallmembran oder die Kunststoffmembran hat vorzugsweise eine Dicke von 0,1 bis 0,3 mm.

Beschreibung der Erfindung anhand von Ausführungsbeispielen

Nachstehend werden zweckmäßige Ausführungsbeispiele der Erfindung anhand von Zeichnungsfiguren näher erläutert. Wiederkehrende Merkmale sind der Übersichtlichkeit halber lediglich einmal mit einem Bezugszeichen gekennzeichnet. Es zeigen:

Fig. 1    eine vereinfachte Prinzipdarstellung eines Ultraschall-Fluidzählers in Schnittdarstellung zur Anwendung des erfindungsgemäßen Verfahrens;

Fig. 2 ein Blockschaltbild eines Beispiels des Aufbaus des Elektronikmoduls eines Ultraschall-Fluidzählers;

Fig. 3 ein Flussdiagramm eines beispielhaften Verfahrensablaufs mit einer digitalen Auswertung zur Bestimmung einer Fluiddruckänderung;

Fig. 4 ein Beispiel eines Spannung/Zeit-Diagramms zur Darstellung eines durch Fluiddruckänderung hervorgerufenes Spannungssignals;

Fig. 5 ein Beispiel eines Spannung/Zeit-Diagramms einer Messkondensatorspannung zur Darstellung des Entladevorgangs eines Messkondensators durch verschiedene Spannungssignale; sowie

Fig. 6 ein Flussdiagramm eines beispielhaften Verfahrensablaufs mit einer analogen Auswertung zur Bestimmung einer Fluiddruckänderung.

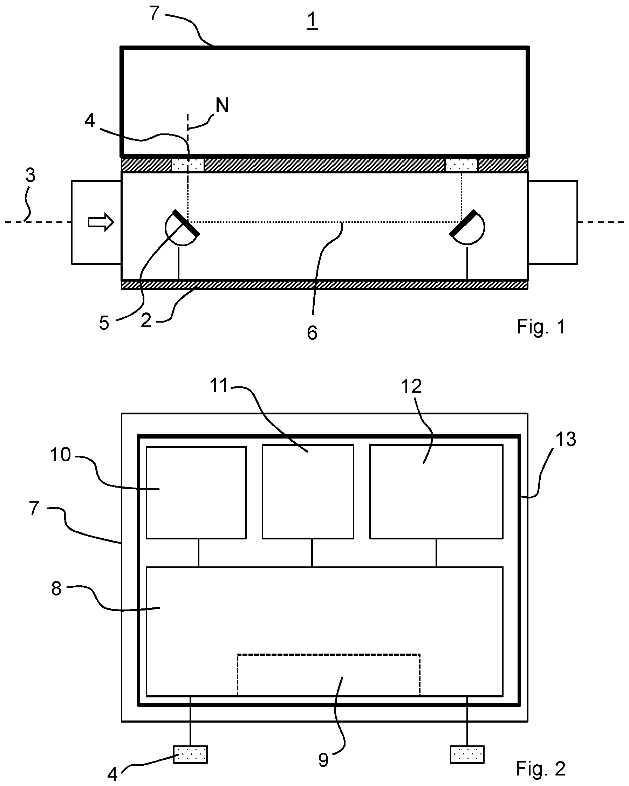

Ein Ultraschall-Fluidzähler 1, z. B. ein Wasserzähler, besitzt ein Gehäuse, z. B. ein Messrohrgehäuse 2, welches in ein Fluidleitungsnetz 3, z. B. eine Versorgungsleitung für Kalt- oder Warmwasser, installiert wird. Der Ultraschall-Fluidzähler 1 verfügt beispielsweise über zwei Ultraschallwandler 4, von denen der eine Ultraschallwandler näher zum Einlass (siehe Pfeil in Fig. 1) als der weitere Ultraschallwandler angeordnet ist. Die Ultraschallwandler 4 befinden sich beispielsweise in einer Bohrung der Wandung des Messrohrgehäuses 2 und sind mit ihrer jeweiligen Flächennormale N senkrecht zur Fließrichtung des Fluids innerhalb des Messrohrgehäuses 2 orientiert.

Jeder Ultraschallwandler 4 umfasst ein piezoelektrisches Element in Form eines Piezokeramikplättchens, welches beidseitig entlang seiner Hauptflächen mit (in Fig. 1 nicht dargestellten) Elektroden versehen ist, die in einem Elektronikmodul 7 verdrahtet sind, welches sich an der Oberseite des Messrohrgehäuses 2 befindet. Das Elektronikmodul 7 beinhaltet eine Steuerungs- und Auswerteelektronik 14 zur Steuerung des Betriebs sowie zur Auswertung des empfangenen Ultraschallsignals. Das piezokeramische Plättchen kann hierbei unmittelbar dem Fluid ausgesetzt sein. Alternativ kann zwischen dem piezokeramischen Plättchen und dem Fluid ein Metallplättchen oder eine Metallmembran oder ein Kunststoffplättchen oder eine Kunststoffmembran vorgesehen sein, welche die hydraulische Kraft oder Kraftänderung an das piezokeramische Plättchen überträgt.

Innerhalb des Messrohrgehäuses 2 befinden sich zwei Reflektoren 5, die dazu vorgesehen sind, ein vom Ultraschallwandler 4 versendetes Ultraschallsignal (Ultraschallburst) jeweils in Längsrichtung des Messrohrgehäuses 2 umzulenken bzw. jeweils aus der Längsrichtung des Messrohrgehäuses 2 wieder zum empfangenden Ultraschallwandler hin abzulenken. Die Messstrecke 6 des in Fig. 1 gezeigten Beispiels des Ultraschall-Fluidzählers 1 ist U-förmig. Sie kann aber auch andere Formen wie z. B. W-Form oder Doppel-W-Form besitzen, bei der jeweils mehr als zwei Umlenkungen stattfinden bzw. mehr Umlenkspiegel vorgesehen sind. Durch Versenden von Ultraschallsignalen sowohl in als auch entgegen der Fließrichtung kann, sofern das Fluid das Messrohrgehäuse 2 durchströmt, anhand der hierdurch begründeten Laufzeit und/oder Laufzeitdifferenz des Ultraschallsignals in Strömungsrichtung sowie entgegen der Strömungsrichtung auf das Durchflussvolumen geschlossen werden.

Fig. 2 zeigt in stark vereinfachter schematischer Darstellungsweise die wesentlichen Funktionselemente des Elektronikmoduls 7 eines Ultraschall-Fluidzählers 1. Das Elektronikmodul 7 umfasst eine Platine 13 mit einem Mikroprozessor 8 mit einem Speicher 9. Ferner ist eine Batterie 10 vorgesehen, die die Lebensdauer des Ultraschall-Fluidzählers im Feld sicherstellt. Derartige Ultraschall-Fluidzähler sind für eine Lebensdauer von mindestens 12 Jahren ausgelegt, sodass die Batterie 10 die Funktion des Ultraschall-Fluidzählers 1 über diesen langen Zeitbereich sicherstellen muss. Des Weiteren kann sich an dem Ultraschall-Fluidzähler 1 ein Display 12 befinden. Die von dem Ultraschall-Fluidzähler 1 erzeugten Daten werden über eine Datenschnittstelle 11 ausgegeben. Hierbei handelt es sich in der Regel um eine Funkschnittstelle, die es ermöglicht, Verbrauchsdaten und/oder weitere Betriebsdaten an einen externen (nicht dargestellten) Datensammler zu übertragen und/oder von dem Datensammler versendete Daten zu empfangen. Der Datensammler kann entweder fest positioniert oder mobil sein. Die Daten des Ultraschall-Fluidzählers 1 werden üblicherweise vom Datensammler weiter an ein (ebenfalls nicht dargestelltes) Head-End übertragen. Im Head-End erfolgt die Auswertung der Daten.

Eine über das Fluid auf den Ultraschallwandler 4 wirkende hydraulische Kraftänderung erzeugt einen Spannungssignalverlauf U am Ultraschallwandler, welches bzw. welcher erfindungsgemäß mittels der Auswerteelektronik 14 abgegriffen wird. Die hydraulische Kraftänderung wird hierbei durch eine Fluiddruckänderung verursacht.

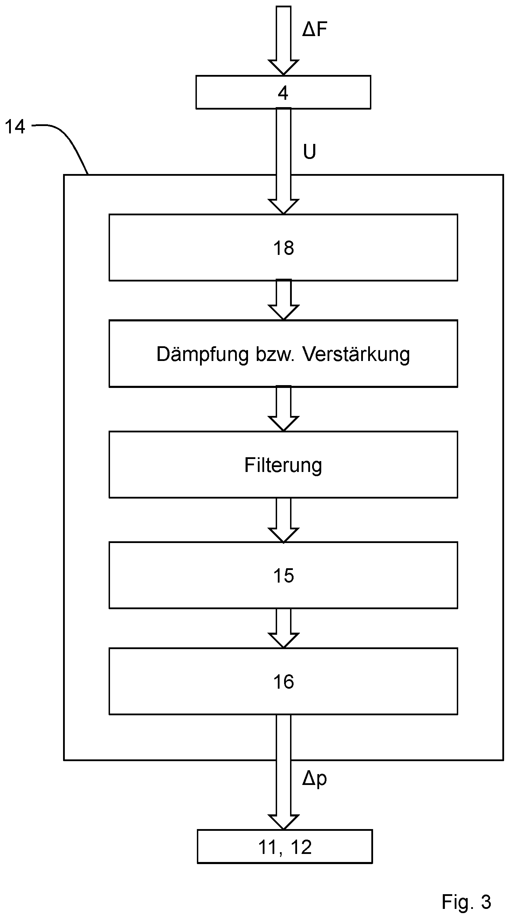

Fig. 3 zeigt einen beispielhaften Verfahrensablauf zur digitalen Auswertung des ermittelten Spannungssignalverlaufs U. Wenn eine Kraft bzw. Kraftänderung $\Delta F$ auf den Ultraschallwandler 4 wirkt, erzeugt dieser aufgrund des piezoelektrischen Effektes einen Spannungssignalverlauf U. Der piezoelektrische Effekt beschreibt das Auftreten einer elektrischen Spannung an Festkörpern, wenn diese elastisch verformt werden. Wirkt eine hydraulische Kraftänderung

$\Delta F_3$ auf den piezokeramischen Ultraschallwandler 4 mit einer piezoelektrischen Spannungskonstante gas, einem Elektrodenabstand t und der Oberfläche der Piezokeramik $A_{PZT}$, wird das Spannungssignal $U_i$ erzeugt. Das Spannungssignal $U_i$ lässt sich wie folgt berechnen:

$$U_i = g_{33} \cdot t \cdot \frac{\Delta F_3}{A_{PZT}} \qquad (1)$$

Hierbei lässt sich die Fluiddruckänderung $\Delta p$ in Verbindung mit der Oberfläche der Piezokeramik $A_{PZT}$ in die wirkende hydraulische Kraftänderung $\Delta F_3$ umrechnen:

$$\Delta F_3 = \Delta p \cdot A_{PZT} \qquad (2)$$

Die vorliegende Erfindung nutzt diese Eigenschaften, die jeder piezokeramische Ultraschallwandler 4 und dementsprechend jeder Ultraschall-Fluidzähler 1 bereits besitzt. Es kann somit auf zusätzliche Sensorik verzichtet werden, weshalb das Verfahren besonders leicht umsetzbar und kostengünstig ist.

Wie die Fig. 3 weiter zeigt, wird der durch die hydraulische Kraftänderung am Ultraschallwandler 4 erzeugte Spannungssignalverlauf U z. B. mittels eines Operationsverstärkers 18 der Auswerteelektronik 14, vorzugsweise hochohmig, abgegriffen. Für den Abgriff des Spannungssignalverlaufs U können die Spannungssignale $U_i$ kontinuierlich abgegriffen werden. Nach dem Abgriff werden bzw. wird die Spannungssignale $U_i$ oder der Spannungssignalverlauf U gedämpft oder verstärkt. Danach werden bzw. wird die Spannungssignale $U_i$ bzw. der Spannungssignalverlauf U gefiltert, um Störsignale zu entfernen. Die Vorverarbeitung des Spannungssignalverlaufs U ist hiermit abgeschlossen

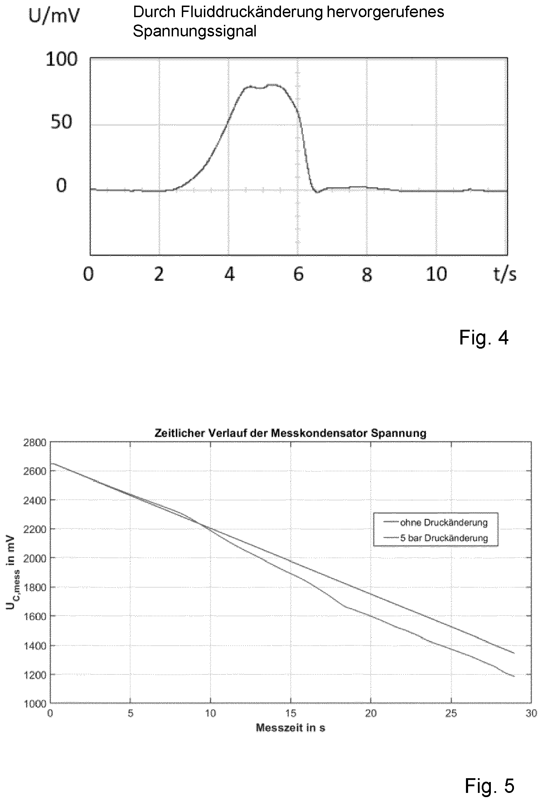

Fig. 4 zeigt einen am Ultraschallwandler 4 hervorgerufenen beispielhaften Spannungssignalverlauf U in mV in Abhängigkeit der Zeit t in s nach der Vorverarbeitung desselben. Aufgrund einer Fluiddruckerhöhung wird eine hydraulische Kraftänderung auf den Ultraschallwandler 4 ausgeübt, wodurch die Spannung des Spannungssignalverlaufs U deutlich ansteigt. Sobald im Fluidleitungsnetz ein konstanter bzw. statischer Fluiddruck vorliegt, wird die am Ultraschallwandler 4 erzeugte Spannung durch dessen Innenwiderstände selbsttätig abgebaut. Der Spannungssignalverlauf U fällt somit ab und erreicht den Spannungswert 0 V. Ein Ausschlag des Spannungssignalverlaufs U stellt somit lediglich eine relative Fluiddruckänderung dar. Wenn die Spannung des Spannungssignalverlaufs 0 V beträgt, liegt dementsprechend ein statischer Fluiddruck vor. Aufgrund einer Fluiddruckreduzierung kann das Spannungssignal auch abfallen und negative Werte annehmen.

Der Spannungssignalverlauf U wird im Anschluss daran ausgewertet und hierfür einer Auswerteschaltung 15, siehe Fig. 3, zugeführt. Die Auswerteschaltung 15 umfasst ein Halbleiterbauelement, z. B. ein n-Kanal MOSFET, das in Abhängigkeit des bzw. der an seinem Ansteueranschluss bzw. Gate-Anschluss anliegenden Pegelverlaufs bzw. Spannung des Spannungssignalverlaufs U einen, vorzugsweise auf einen bekannten Spannungspegel, aufgeladenen Messkondensator entlädt. Je nach dem Pegelverlauf bzw. der Spannung des Spannungssignalverlaufs U wird der Messkondensator über eine Messzeit in s, z. B. 30 s, unterschiedlich stark entladen, wie dies Fig. 5 darstellt. Die Fig. 5 zeigt zum einen den Verlauf des Ladezustands $U_{C,mess}$ in mV des Messkondensators über die Messzeit, welcher mit einem Spannungssignalverlauf basierend auf keiner Fluiddruckänderung entladen wird. Zum anderen ist der Verlauf des Ladezustands $U_{C,mess}$ eines Messkondensators über die Zeit dargestellt, der mit einem Spannungssignalverlauf basierend auf einer linearen relativen Fluiddruckerhöhung von 5 bar über die Messzeit entladen wird. Es zeigt sich, dass der Messkondensator durch den Spannungssignalverlauf stärker entladen wird.

Nach einer festgelegten Entladezeit wird der Ladezustand des Messkondensators digital ausgewertet und hierfür mittels eines Analog-Digitalwandlers 16 ausgelesen. Der gemessene Ladezustand wird mit Hilfe eines Kennfeldes, vorzugweise einer Lookup-Tabelle oder einem Polynom, in eine korrespondierende Fluiddruckänderung $\Delta p$ umgerechnet. Nach dem Auslesen wird der Messkondensator wieder auf den bekannten Spannungspegel aufgeladen und erneut entladen.

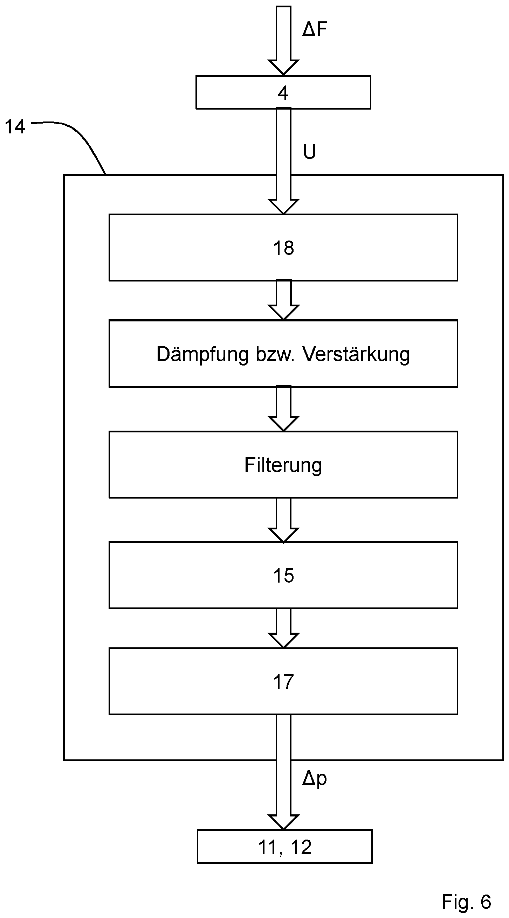

Alternativ zur digitalen Auswertung kann der Ladzustand des Messkondensators auch analog über eine Analog-Schaltung 17 ausgewertet werden, siehe Fig. 6. Hierbei wird ein Spannungssignalverlauf U wie bei der digitalen Auswertung abgegriffen und damit ein Messkondensator entladen. Die Ladespannung des Messkondensators wird über einen bekannten Widerstand abgebaut und die Zeit gemessen, die der Entladeprozess benötigt. Die gemessene Zeitdauer hängt somit mit der Ladespannung des Messkondensators zusammen. Die gemessene Zeitdauer kann mittels eines Kennfeldes in eine korrespondierende Fluiddruckänderung $\Delta p$ umgerechnet werden. Alternativ kann mittels der Zeitdauer zuerst die Ladespannung des Messkondensators berechnet werden und Letztere im Anschluss daran mittels eines Kennfeldes in eine korrespondierende Fluiddruckänderung $\Delta p$ umgerechnet werden. Das Kennfeld kann, wie bei der analogen Auswertung, eine Lookup-Tabelle oder ein Polynom sein.

Zudem kann basierend auf dem Spannungssignalverlauf U der in dem Fluidleitungsnetz vorliegende statische Fluiddruck bestimmt werden. Der vorliegende statische Fluiddruck kann durch eine Integration oder eine Akkumulation des Spannungssignalverlaufs U oder eine Integration oder eine Akkumulation der abgegriffenen Spannungssignale oder eine Integration oder Akkumulation von aus dem Spannungssignalverlauf abgeleiteter Fluiddruckwerte oder Fluiddruckänderungswerte in Verbindung mit einem bekannten initialen, den Druck im Fluidleitungsnetz 3 repräsentierender Wert, welcher z. B. beim Einbau des Ultraschall-Fluidzählers 1 ermittelt wurde, ermittelt werden. Zudem kann eine Leckageerkennung und/oder eine Überwachung des Fluidleitungsnetzes 3 und/oder eine Regelung der Ansteuerung der Pumpenleistung des Versorgers für das Fluidleitungsnetzes 3 realisiert werden. Somit können basierend auf dem Spannungssignalverlauf U verschiedene Kennwerte ermittelt bzw. verschiedene Funktionen realisiert werden. Die Ermittlung der Kennwerte bzw. die Realisierung der Funktionen wird zweckmäßigerweise in einem Head-End vorgenommen. Diese Kennwerte oder Funktionen können über das Display 12 dem Nutzer zur Verfügung gestellt oder mittels der Datenschnittstelle 11 exportiert werden.

Das erfindungsgemäße Verfahren ermöglicht es, mit der bereits im Ultraschall-Fluidzähler 1 vorhandenen Sensorik eine Fluiddruckänderung zu detektieren. Da keine zusätzlichen Sensoren verwendet werden müssen, ist dieses Verfahren besonders leicht umsetzbar. Zudem lässt sich das Verfahren in einfacher Weise und kostengünstig umsetzen, da lediglich die Auswerteelektronik 14 bzw. die diesbezügliche Betriebssoftware entsprechen angepasst werden müssen.

BEZUGSZEICHENLISTE

1     Ultraschall-Fluidzähler
2     Messrohrgehäuse
3     Fluidleitungsnetz
4     Ultraschallwandler
5     Reflektor
6     Messstrecke
7     Elektronikmodul
8     Mikroprozessor
9     Speicher
10    Batterie
11    Datenschnittstelle
12    Display
13    Platine
14    Auswerteelektronik
15    Auswerteschaltung
16    Analog-Digital-Wandler
17    Analog-Schaltung
18    Operationsverstärker

$\Delta F$    Kraftänderung
$U$     Spannungssignalverlauf
$U_i$    Spannungssignal
$\Delta p$    Fluiddruckänderung

**Patentansprüche**

1. Verfahren zum Betrieb eines Ultraschall-Fluidzählers (1), vorzugsweise eines Ultraschall-Wasserzählers, in einem Fluidleitungsnetz (3), bei dem von einem Ultraschallwandler (4) ein Ultraschallsignal erzeugt wird, welches eine Messstrecke (6) durchläuft und von einer Auswerteelektronik (14) auf Basis der Laufzeit und/oder eines Laufzeitunterschieds des Ultraschallsignals das Durchflussvolumen bestimmt wird, **dadurch gekennzeichnet, dass**

eine über das Fluid auf den Ultraschallwandler (4) wirkende durch eine Fluiddruckänderung verursachte hydraulische Kraftänderung einen Spannungssignalverlauf an dem Ultraschallwandler (4) erzeugt, wobei die Spannung des Spannungssignalverlaufs von der Stärke und der Einwirkdauer der hydraulischen Kraftänderung abhängt,
der Spannungssignalverlauf von der Auswerteelektronik (14) abgegriffen wird, und
basierend auf der Spannung des Spannungssignalverlaufs eine Fluiddruckänderung abgeleitet wird.

2. Verfahren nach Anspruch 1, **dadurch gekennzeichnet, dass** für den Abgriff des Spannungssignalverlaufs Spannungssignale kontinuierlich oder diskontinuierlich abgegriffen werden.

3. Verfahren nach Anspruch 1 oder 2, **dadurch gekennzeichnet, dass** eine Integration oder Akkumulation der abgegriffenen Spannungssignale oder eine Integration oder Akkumulation von aus den abgegriffenen Spannungswerten abgeleiteter Fluiddruckwerte oder Fluiddruckänderungswerte oder eine Integration oder Akkumulation von aus dem Spannungssignalverlauf abgeleiteter Fluiddruckwerte oder Fluiddruckänderungswerte erfolgt.

4. Verfahren nach den vorhergehenden Ansprüchen, **dadurch gekennzeichnet, dass** ein initialer, den Druck im Fluidleitungsnetz (3) repräsentierender Wert vorgegeben ist.

5. Verfahren nach den vorhergehenden Ansprüchen, **dadurch gekennzeichnet, dass** der Spannungssignalverlauf von der Auswerteelektronik (14) hochohmig abgegriffen wird.

6. Verfahren nach einem der vorhergehenden Ansprüche, **dadurch gekennzeichnet, dass** die Spannungssignale oder der Spannungssignalverlauf verstärkt oder gedämpft werden bzw. wird.

7. Verfahren nach einem der vorhergehenden Ansprüche, **dadurch gekennzeichnet, dass** die Spannungssignale oder der Spannungssignalverlauf gefiltert werden bzw. wird.

8. Verfahren nach einem der vorhergehenden Ansprüche, **dadurch gekennzeichnet, dass** ein zuvor, vorzugsweise auf einen vorher festgelegten Spannungspegel, aufgeladener Messkondensator entladen wird.

9. Verfahren nach Anspruch 8, **dadurch gekennzeichnet, dass** der Ladezustand des Messkondensators jeweils nach einer festgelegten Entladezeit ermittelt wird.

10. Verfahren nach Anspruch 9, **dadurch gekennzeichnet, dass** der Ladezustand des Messkondensators digital ausgewertet wird.

11. Verfahren nach Anspruch 9, **dadurch gekennzeichnet, dass** der Ladezustand des Messkondensators analog ausgewertet wird.

12. Verfahren nach einem der Ansprüche 9 bis 11, **dadurch gekennzeichnet, dass** aus dem ermittelten Ladezustand des Messkondensators mittels eines Kennfeldes eine korrespondierende Fluiddruckänderung ermittelt wird.

13. Verfahren nach Anspruch 12, **dadurch gekennzeichnet, dass** das Kennfeld eine Lookup-Tabelle oder ein Polynom ist.

14. Verfahren nach einem der vorhergehenden Ansprüche, **dadurch gekennzeichnet, dass** basierend auf dem Spannungssignalverlauf folgendes vorgenommen wird:

    Ermittlung eines Fluiddrucks und/oder
    Erkennung einer Leckage und/oder
    Überwachung des Fluidleitungsnetzes (3) und/oder
    Regelung der Ansteuerung der Pumpenleistung des Versorgers für das Fluidleitungsnetzes (3).

15. Verfahren nach Anspruch 14, **dadurch gekennzeichnet, dass** die Feststellung einer Fluiddruckänderung und/oder die Ermittlung eines Fluiddrucks und/oder die Erkennung einer Leckage und/oder die Überwachung des Fluidleitungsnetzes (3) und/oder die Regelung der Ansteuerung der Pumpenleistung des Versorgers für das Fluidleitungsnetzes (3) von einem Head-End vorgenommen wird.

16. Ultraschall-Fluidzähler (1), vorzugsweise Ultraschall-Wasserzähler, für die Installation in einem Fluidleitungsnetz umfassend

    ein Messrohrgehäuse (2),
    mindestens einen Ultraschallwandler (4) zum Aussenden und/oder zum Empfang eines Ultraschallsignals, welches entlang einer Messstrecke (6) läuft,
    ein Elektronikmodul (7), welches eine Steuerungs- und Auswerteelektronik (14) zur Steuerung des Betriebs sowie zur Auswertung des empfangenen Ultraschallsignals beinhaltet, sowie
eine Batterie (10), **dadurch gekennzeichnet, dass**
der Ultraschall-Fluidzähler (1) nach einem Verfahren gemäß einem der vorhergehenden Ansprüche betrieben
wird.

17. Ultraschall-Fluidzähler (1) nach Anspruch 16, **dadurch gekennzeichnet, dass** eine Datenschnittstelle (11) zum
Datenexport vorgesehen ist.


**Claims**

1. Method for operating an ultrasonic fluid meter (1), preferably an ultrasonic water meter, in a fluid line network (3),
wherein an ultrasonic signal is generated by an ultrasonic transducer (4) and passes through a measurement section
(6), and the flow volume is determined by evaluation electronics (14) on the basis of the time of flight and/or a time
of flight difference of the ultrasonic signal, **characterized in that**

   a hydraulic force change acting on the ultrasonic transducer (4) via the fluid and caused by a fluid pressure
   change generates a voltage signal profile at the ultrasonic transducer (4), the voltage of the voltage signal profile
   being dependent on the strength and the duration of action of the hydraulic force change,
   the voltage signal profile is tapped off by the evaluation electronics (14), and
   a fluid pressure change is derived on the basis of the voltage of the voltage signal profile.

2. Method according to Claim 1, **characterized in that** for tapping of the voltage signal profile, voltage signals are
tapped off continuously or discontinuously.

3. Method according to Claim 1 for 2, **characterized in that** the tapped-off voltage signals are integrated or accumulated
or fluid pressure values or fluid pressure change values derived from the tapped-off voltage values are integrated
or accumulated or fluid pressure values or fluid pressure change values derived from the voltage signal profile are
integrated or accumulated.

4. Method according to the preceding claims, **characterized in that** an initial value representing the pressure in the
fluid line network (3) is predefined.

5. Method according to the preceding claims, **characterized in that** the voltage signal profile is tapped off with high
impedance by the evaluation electronics (14).

6. Method according to any of the preceding claims, **characterized in that** the voltage signals or the voltage signal
profile are or is amplified or attenuated.

7. Method according to any of the preceding claims, **characterized in that** the voltage signals or the voltage signal
profile are or is filtered.

8. Method according to any of the preceding claims, **characterized in that** a measuring capacitor charged beforehand,
preferably to a previously defined voltage level, is discharged.

9. Method according to Claim 8, **characterized in that** the state of charge of the measuring capacitor is ascertained
in each case after a defined discharge time.

10. Method according to Claim 9, **characterized in that** the state of charge of the measuring capacitor is evaluated
digitally.

11. Method according to Claim 9, **characterized in that** the state of charge of the measuring capacitor is evaluated in
an analogue manner.

12. Method according to any of Claims 9 to 11, **characterized in that** a corresponding fluid pressure change is ascertained from the ascertained state of charge of the measuring capacitor by means of a set of characteristic curves.

13. Method according to Claim 12, **characterized in that** the set of characteristic curves is a look-up table or a polynomial.

14. Method according to any of the preceding claims, **characterized in that** the following is performed on the basis of the voltage signal profile:

    ascertaining a fluid pressure and/or
    detecting a leak and/or
    monitoring the fluid line network (3) and/or
    regulating the activation of the pump power of the supplier for the fluid line network (3).

15. Method according to Claim 14, **characterized in that** establishing a fluid pressure change and/or ascertaining a fluid pressure and/or detecting a leak and/or monitoring the fluid line network (3) and/or regulating the activation of the pump power of the supplier for the fluid line network (3) are/is performed by a head-end.

16. Ultrasonic fluid meter (1), preferably ultrasonic water meter, for installation in a fluid line network, comprising

    a measurement tube housing (2),
    at least one ultrasonic transducer (4) for emitting and/or for receiving an ultrasonic signal that travels along a measurement section (6),
    an electronics module (7), which includes control and evaluation electronics (14) for controlling operation and for evaluating the received ultrasonic signal, and
    a battery (10), **characterized in that**
    the ultrasonic fluid meter (1) is operated according to a method according to any of the preceding claims.

17. Ultrasonic fluid meter (1) according to Claim 16, **characterized in that** provision is made of a data interface (11) for the purpose of data export.

**Revendications**

1. Procédé de fonctionnement d'un compteur de fluide à ultrasons (1), de préférence un compteur d'eau à ultrasons, dans un réseau de conduites de fluide (3), procédé dans lequel un transducteur à ultrasons (4) génère un signal ultrasonore qui se propage à travers une section de mesure (6) et une électronique d'évaluation (14) détermine le volume d'écoulement sur la base du temps de propagation et/ou d'une différence de temps de propagation du signal ultrasonore, **caractérisé en ce que**

    une variation de force hydraulique, agissant par le biais du fluide sur le transducteur à ultrasons (4) et provoquée par une variation de pression de fluide, génère une courbe de signal de tension au niveau du transducteur à ultrasons (4), la tension de la courbe de signal de tension dépendant de l'intensité et de la durée d'action de la variation de force hydraulique,
    la courbe de signal de tension est captée par l'électronique d'évaluation (14) et
    une variation de pression de fluide est dérivée sur la base de la tension de la courbe de signal de tension.

2. Procédé selon la revendication 1, **caractérisé en ce que** les signaux de tension sont captés de manière continue ou discontinue afin de capter la courbe de signal de tension.

3. Procédé selon la revendication 1 ou 2, **caractérisé en ce qu'**une intégration ou accumulation des signaux de tension captés ou une intégration ou accumulation de valeurs de pression de fluide ou de valeurs de variation de pression de fluide dérivées des valeurs de tension captées ou une intégration ou accumulation de valeurs de pression de fluide ou de valeurs de variation de pression de fluide dérivées de la courbe de signal de tension est effectuée.

4. Procédé selon les revendications précédentes, **caractérisé en ce qu'**une valeur initiale est spécifiée qui est représentative de la pression dans le réseau de conduites fluidiques (3).

5. Procédé selon les revendications précédentes, **caractérisé en ce que** la courbe de signal de tension est captée avec une résistance élevée par l'électronique d'évaluation (14).

6. Procédé selon l'une des revendications précédentes, **caractérisé en ce que** les signaux de tension ou la courbe de signal de tension sont amplifiés ou atténués.

7. Procédé selon l'une des revendications précédentes, **caractérisé en ce que** les signaux de tension ou la courbe de signal de tension sont filtrés.

8. Procédé selon l'une des revendications précédentes, **caractérisé en ce qu'**un condensateur de mesure préalablement chargé, de préférence jusqu'à un niveau de tension fixé à l'avance, est déchargé.

9. Procédé selon la revendication 8, **caractérisé en ce que** l'état de charge du condensateur de mesure est déterminé à chaque fois après un temps de décharge fixé.

10. Procédé selon la revendication 9, **caractérisé en ce que** l'état de charge du condensateur de mesure est évalué numériquement.

11. Procédé selon la revendication 9, **caractérisé en ce que** l'état de charge du condensateur de mesure est évalué analogiquement.

12. Procédé selon l'une des revendications 9 à 11, **caractérisé en ce qu'**une variation de pression de fluide correspondante est déterminée à partir de l'état de charge déterminé du condensateur de mesure à l'aide d'un diagramme caractéristique.

13. Procédé selon la revendication 12, **caractérisé en ce que** le diagramme caractéristique est une table de consultation ou un polynôme.

14. Procédé selon l'une des revendications précédentes, **caractérisé en ce que** les étapes suivantes sont réalisées à partir de la courbe de signal de tension :

    déterminer une pression de fluide et/ou
    détecter une fuite et/ou
    surveiller le réseau de conduites de fluide (3) et/ou
    réguler la commande des performances de la pompe du fournisseur du réseau de conduites de fluide (3).

15. Procédé selon la revendication 14, **caractérisé en ce que** la définition d'une variation de pression de fluide et/ou la détermination d'une pression de fluide et/ou la détection d'une fuite et/ou la surveillance du réseau de conduites de fluide (3) et/ou la régulation de la commande de la puissance de la pompe du fournisseur du réseau de conduites de fluide (3) sont réalisées par une tête de réseau.

16. Compteur de fluide à ultrasons (1), de préférence compteur d'eau à ultrasons, destiné à l'installation dans un réseau de conduites de fluide, ledit compteur de fluide à ultrasons comprenant

    un boîtier de tube de mesure (2),
    au moins un transducteur à ultrasons (4) destiné à émettre et/ou recevoir un signal ultrasonore qui se propage le long d'une section de mesure (6),
    un module électronique (7) qui contient une électronique de commande et d'évaluation (14) destinée à commander le fonctionnement et à évaluer le signal ultrasonore reçu, et
    une batterie (10), **caractérisé en ce que**
    le compteur de fluide à ultrasons (1) fonctionne selon un procédé selon l'une des revendications précédentes.

17. Compteur de fluide à ultrasons (1) selon la revendication 16, **caractérisé en ce qu'**une interface de données (11) est prévue pour l'exportation de données.

7

1

N

4

3

5    2

6

Fig. 1

11          12

10                13

7

8

9

4        Fig. 2

Fig. 3

U/mV    Durch Fluiddruckänderung hervorgerufenes
        Spannungssignal

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3367074 A1
- EP 3158297 B1
- DE 102012022376 A1
- WO 2018219492 A1
- EP 3798600 A1
- DE 102020122128 B3